# EUROPÄISCHE PATENTSCHRIFT

(11) **EP 2 253 443 B1**
(45) Veröffentlichungstag und Bekanntmachung des Hinweises auf die Patenterteilung: **08.02.2012**
(21) Anmeldenummer: 09175622.1
(22) Anmeldetag: 11.11.2009
(51) Int. Cl.: B29C 43/24, B29C 43/26, B29D 30/72, B29D 30/60, B29D 30/30

(54) **Verfahren und Vorrichtung zur Herstellung eines Fahrzeugluftreifens**
Method and device for manufacturing a vehicle pneumatic tyre
Procédé et dispositif de fabrication d'un pneu de véhicule

(30) Priorität: 19.05.2009 DE 102009025842
(43) Veröffentlichungstag der Anmeldung: 24.11.2010
(73) Patentinhaber: Continental Reifen Deutschland GmbH, 30165 Hannover (DE)
(72) Erfinder: Frerichs, Udo, 30855 Langenhagen (DE)
(74) Vertreter: Finger, Karsten

(56) Entgegenhaltungen:
- EP-A1- 0 542 431
- EP-A1- 1 486 320
- EP-A2- 1 769 905
- DE-A1-102007 049 871
- US-A- 5 762 740

## Beschreibung

Die Erfindung betrifft ein Verfahren zur Herstellung eines Fahrzeugluftreifens, bei dem ein extrudierter profilierter Kautschukstrang zum Aufbau einer Reifenaufbauschicht einem rotatorisch angetriebenen Aufbaukörper zum Aufbau einer Kautschukschicht zugeführt und schrauben- und/oder spiralförmig auf dem Aufbaukörper aufgespult wird, und eine Vorrichtung zum Zuführen und Andrücken von strangförmigem profilierten Kautschukmaterial zu einem rotatorisch antreibbaren Aufbaukörper zum Aufbau einer Reifenaufbauschicht auf dem Aufbaukörper, mit einer Extrudereinrichtung zum Erzeugen eines strangförmigen extrudierten Kautschukmaterials, mit einer der Extrudereinrichtung in Förderrichtung des strangförmigen extrudierten Kautschukmaterials nachgeordneten Ausformungseinrichtung zur Ausformung des strangförmigen extrudierten Kautschukmaterials und mit einer der Ausformungseinrichtung in Förderrichtung nachgeordneten Andrückeinrichtung zum Auflegen- und Andrücken des ausgeformten, strangförmigen extrudierten Kautschukmaterials auf dem Aufbaukörper.

Ein derartiges Verfahren und eine derartige Vorrichtung ist beispielsweise aus der EP1094930B1 bekannt. Zur Erzeugung des Laufstreifens oder des Seitenwandgummistreifens wird ein extrudierter Kautschukstrang auf einem torusförmig aufgebauten Aufbaukörper rotatorisch auf diesem aufgebauten Teilrohling, bestehend aus Karkasse und Gürtel aufgespult. Der extrudierte Kautschukstrangs wird dabei unter Verdrehen des Aufbaukörpers um dessen Achse kontinuierlich aufgewickelt unter gezielter nebeneinander und/oder überlappend aufeinander angeordneten Windungen der Wicklung. Auf diese Weise ist es möglich, den Laufstreifen oder das Seitenwandgummi formgenau und unter Vermeidung von Rundlaufungenauigkeiten aufzubringen. Der kontinuierlich aufgewickelte Gummistrang wird dabei mit einer während der gesamten Wicklung kontinuierlich bleibend ausgebildeten Querschnittsform und -größe aufgespult. Da beispielsweise im Bereich des Seitenwandgummis im oberen Seitenwandbereich die auf eine Karkasse aufgelegte Seitenwand mit einer dünnen Gummischicht und im unteren Seitenwandbereich im Bereich des Reifenwulstes und auch im Übergangsbereich zum Laufstreifen hin mit einer dickeren Lage ausgebildet ist, werden diese Dickenunterschiede der Seitenwand durch gezieltes, gesteuertes Verdrehen des Gummistrangs um seine Längsachse während des Aufwickelns und intelligentes, gesteuertes Überlappen der Windungen erzeugt. Zum einen sind diese Möglichkeiten jedoch bei großen Dickenunterschieden begrenzt. Zum anderen können die fein abgestimmten Verdrehungen und Überlappungsabläufe eines einzigen Strangs mit konstanter Querschnittsform und - größe Lufteinschlüsse beim Wickeln ermöglichen. Um dies zu vermeiden, ist zusätzlicher Aufwand während des Wickelns erforderlich und dennoch bei sehr aufwendigen Konturen der Einsatz beschränkt.

Ein weiteres Verfahren zum Aufspulen von Gummistreifen aus einer Rohgummimischung auf einen Reifenrohling ist in der EP 1 769 905 A2 offenbart.

Der Erfindung liegt daher die Aufgabe zugrunde, in einfacher Weise ein auf die endgültige Form des Bauteils abgestimmtes Aufwickeln und einen breiten Einsatzbereich des Herstellens von Gummibauteilen durch Aufspulen auf den Aufbaukörper zur Herstellung eines Fahrzeugluftreifens zuverlässig zu ermöglichen.

Erfindungsgemäß gelöst wird die Aufgabe durch das Verfahren zur Herstellung eines Fahrzeugluftreifens, bei dem ein extrudierter profilierter Kautschukstrang zum Aufbau einer Reifenaufbauschicht einem rotatorisch angetriebenen Aufbaukörper zum Aufbau einer Kautschukschicht zugeführt und schrauben- und/oder spiralförmig auf dem Aufbaukörper aufgespult wird, gemäß den Merkmalen von Anspruch 1, bei dem der extrudierte Kautschukstrang zwischen Extruder und Aufbaukörper durch den Öffnungsspalt mehrerer hintereinander angeordneter Paare von drehbar gelagerten - insbesondere angetriebenen - Formrollen zur Herstellung unterschiedlicher Querschnittsformen hindurch gefördert wird, wobei der Öffnungsspalt der einzelnen Paare jeweils unterschiedlich geformt ist und gesteuert geöffnet und geschlossen werden kann, und bei dem während des Aufspulens des Kautschukstrangs auf den Aufbaukörper zur Veränderung der Querschnittsform des Kautschukstrangs das Paar der zur Ausformung auf den Kautschukstrang einwirkenden Formrollen - insbesondere in Abhängigkeit von der Kontur des durch Aufwickeln erzeugten Reifenaufbauschicht des Fahrzeugluftreifens - gesteuert gewechselt wird.

Unabhängig davon wird die Aufgabe erfindungsgemäß durch die Ausbildung einer Vorrichtung zum Zuführen und Andrücken von strangförmigem profilierten Kautschukmaterial zu einem rotatorisch antreibbaren Aufbaukörper zum Aufbau einer Reifenaufbauschicht auf dem Aufbaukörper, mit einer Extrudereinrichtung zum Erzeugen eines strangförmigen extrudierten Kautschukmaterials, mit einer der Extrudereinrichtung in Förderrichtung des strangförmigen extrudierten Kautschukmaterials nachgeordneten Ausformungseinrichtung zur Ausformung des strangförmigen extrudierten Kautschukmaterials und mit einer der Ausformungseinrichtung in Förderrichtung nachgeordneten Andrückeinrichtung zum Auflegen- und Andrücken des ausgeformten, strangförmigen extrudierten Kautschukmaterials auf dem Aufbaukörper, gemäß den Merkmalen von Anspruch 6 gelöst, bei der die Ausformungseinrichtung mit mehreren in Förderrichtung des extrudierten Kautschukmaterials hintereinander angeordneten Paaren von drehbar gelagerten Formrollen mit jeweils einem unterschiedlich geformten und gesteuert öffenbaren und gesteuert schließbaren Öffnungsspalt ausgebildet ist, bei der der Förderweg des Kautschukmaterials jeweils durch den Öffnungsspalt dieser hintereinander angeordneten Paare von drehbar gelagerten Formrollen geführt ausgebildet ist, und bei der die Paare von drehbar gelagerten Formrollen mit einer Steuereinrichtung zum wahlweise Öffnen und Schließen der einzelnen Paare von Formrollen zur Herstellung unterschiedlicher Querschnittsformen während der Förderung des strangförmigen extrudierten Kautschukmaterials in Wirkverbindung stehen.

Durch einfaches gesteuertes Öffnen und Schließen der hintereinander angeordneten Paare von Rollen kann während des Aufspulens des extrudierten strangförmigen profilierten Kautschukmaterials auf den Aufbaukörper zum Aufbau der gewünschten Reifenaufbauschicht gezielt der Querschnitt des strangförmigen extrudierten Kautschukmaterials gesteuert verändert werden. Somit kann während der Herstellung der Reifenaufbauschicht den individuellen Anforderungen an den gerade zu wickelnden Abschnitt entsprechend die einzelne Windung mit einem hierfür individuell abgestimmten Querschnitt des kontinuierlich geförderten strangförmige extrudierte Kautschukmaterial fein abgestimmt aufgespult werden. Auf diese Weise können die durch Aufspulen erzeugten Gummischichten des Reifens über ein großes Spektrum der Anforderungen an ihren Kontur- und Dickenverlauf aus sehr fein eingestellten Querschnitten des strangförmigen extrudierten Kautschukmaterials erzeugt werden. In einfacher Weise kann hierdurch eine hohe Flexibilität hinsichtlich der konstruktiven Ausbildung des Reifens sicher im Herstellungsprozess umgesetzt werden. Auch aufwendige Konturverläufe des Gummiaufbauteils können fein abgestimmt hergestellt und Lufteinschlüsse einfach und zuverlässig vermieden werden.

Besonders vorteilhaft ist das Verfahren gemäß den Merkmalen von Anspruch 2, wobei zur Erzeugung eines gleitenden Übergangs der Querschnittsformen beim Wechsel von einer durch ein erstes Formrollenpaar erzeugten Querschnittsform zu einer anderen durch ein zweites Formrollenpaar erzeugte Querschnittsform zunächst das erste Formrollenpaar soweit in seinem Öffnungsspalt geschlossen ist, dass eine Ausformung durch das erste Formrollenpaar erfolgt, wobei dann zum Wechsel der Querschnittsform das zweite Formrollenpaar mit seinem Öffnungsspalt soweit geschlossen wird, dass seine Formrollen in formenden Kontakt zum Kautschukstrang stehen, und dann weiter soweit geschlossen wird, dass das Formrollenpaar den Ausformungszustand einnimmt, wobei der erste Formrollenpaar erst geöffnet wird, wenn die Formrollen des zweiten Formrollenpaars soweit geschlossen sind, dass sie in formenden Kontakt zum Kautschukstrang stehen, und somit eine zeitliche Überlappung des Öffnens und Schließens der beiden Formrollenpaare erfolgt.

Hierdurch kann in einfacher Weise ein fließender Übergang von zur Erzeugung der gewünschten Formkontur des Reifenaufbauteils für bestimmte Wicklungsabschnitte ideal eingestellten Strangkonturen ohne unerwünschte Unstetigkeiten des Konturverlaufs erreicht werden.

Besonders vorteilhaft ist das Verfahren gemäß den Merkmalen von Anspruch 3, wobei wenigstens ein Formrollenpaar zur Einstellung der Form ihres Öffnungsspaltes und des hierdurch erzeugten Querschnittes gesteuert in der Position und/oder Ausrichtung seiner beiden Formrollen zueinander verändert werden. Die Kontur kann hierdurch in sehr einfacher Weise schnell durch gezielte Massenverteilung im Querschnitt während des Spulens optimiert eingestellt und somit eine optimierte Anpassung an den gewünschten Querschnitt des durch Spulen zu erzeugenden Bauteils ermöglicht werden.

Besonders vorteilhaft ist das Verfahren gemäß den Merkmalen von Anspruch 4, wobei die beiden Formrollen des Formrollenpaares in ihrer Position zueinander in Richtung ihrer Rotationsachsen gesteuert verschoben werden. Die Kontur kann hierdurch in sehr einfacher Weise schnell durch gezielte Massenverteilung im Querschnitt während des Spulens optimiert eingestellt und somit eine optimierte Anpassung an den gewünschten Querschnitt des durch Spulen zu erzeugenden Bauteils ermöglicht werden.

Besonders vorteilhaft ist das Verfahren gemäß den Merkmalen von Anspruch 5, wobei eine der beiden Formrollen des Formrollenpaares um eine Achse senkrecht zu ihrer Rotationsachse gesteuert verschwenkt wird. Die Kontur kann hierdurch in sehr einfacher Weise schnell durch gezielte Massenverteilung im Querschnitt während des Spulens optimiert eingestellt und somit eine optimierte Anpassung an den gewünschten Querschnitt des durch Spulen zu erzeugenden Bauteils ermöglicht werden.

Besonders vorteilhaft ist die Ausbildung einer Vorrichtung gemäß den Merkmalen von Anspruch 7, wobei zwei oder mehrere - insbesondere alle - der Paare von Formrollen jeweils mit unterschiedlichen Formkonturen wenigstens einer - insbesondere beider - Formrollen ausgebildet sind. Die Kontur kann hierdurch in sehr einfacher Weise schnell durch gezielte Massenverteilung im Querschnitt während des Spulens optimiert eingestellt und somit eine optimierte Anpassung an den gewünschten Querschnitt des durch Spulen zu erzeugenden Bauteils ermöglicht werden

Besonders vorteilhaft ist die Ausbildung einer Vorrichtung gemäß den Merkmalen von Anspruch 8, wobei wenigstens ein Paar von Formrollen mit parallelen Rotationsachsen ausgebildet ist und die beiden Formrollen in Richtung ihrer Rotationsachsen zu einander gesteuert verschiebbar gelagert sind, wobei Mittel zum gesteuerten Verschieben der beiden Formrollen zu einander zur gesteuerten Einstellung der Form des Öffnungsspaltes in Wirkverbindung zu wenigstens einer der beiden Formrollen stehen, die mit der Steuereinrichtung in Verbindung stehen. Die Kontur kann hierdurch in sehr einfacher Weise schnell durch gezielte Massenverteilung im Querschnitt während des Spulens optimiert eingestellt und somit eine optimierte Anpassung an den gewünschten Querschnitt des durch Spulen zu erzeugenden Bauteils ermöglicht werden.

Besonders vorteilhaft ist die Ausbildung einer Vorrichtung gemäß den Merkmalen von Anspruch 9, wobei wenigstens ein Paar von Formrollen mit parallelen Rotationsachsen ausgebildet sind und wenigstens eine der beiden Formrollen um eine Achse senkrecht zu ihrer Rotationsachse gesteuert schwenkbar gelagert ist, wobei Mittel zum gesteuerten Verschwenken zur gesteuerten Einstellung der Form des Öffnungsspaltes in Wirkverbindung zu der schwenkbar gelagerten Formrolle stehen, die mit der Steuereinrichtung in Verbindung stehen. Die Kontur kann hierdurch in sehr einfacher Weise schnell durch gezielte Massenverteilung im Querschnitt während des Spulens optimiert eingestellt und somit eine optimierte Anpassung an den gewünschten Querschnitt des durch Spulen zu erzeugenden Bauteils ermöglicht werden.

Die Erfindung wird im Folgenden an Hand der in den Figuren 1 bis 16 dargestellten Ausführungsbeispiele näher erläutert. Dabei zeigen
- Fig. 1: Querschnitt eines Fahrzeugluftreifens für Personenkraftwagen (Pkw),
- Fig. 2: vereinfachte schematische Darstellung eines Spulkopfes und einer Aufbautrommel zur Erläuterung der Herstellung des zu spulenden profilierten Kautschukstrangs und des Aufspulens zur Herstellung eines Reifens,
- Fig. 3: vergrößerte Darstellung der Ausformeinrichtung von Fig. 2 in Seitenansicht,
- Fig. 4: Draufsicht auf die Ausformeinrichtung von Fig. 3 gemäß Ansicht IV-IV von Fig. 3
- Fig. 5: Querschnittsdarstellung eine bis in die Nähe der Gürtelkante eines Fahrzeugluftreifens reichend ausgebildeten gespulten Kernprofils zur Erläuterung der Herstellung mit veränderten Querschnitten des aufzuspulenden Kautschukstrangs,
- Fig. 6: Querschnittsdarstellung durch die Seitenwand und einen aus einer inneren Base- Schicht und einer äußeren Cap-Schicht ausgebildeten Laufstreifen aus gespulten Kautschuksträngen zur Erläuterung des Spulens mit veränderten Querschnitten des aufzuspulenden, profilierten Kautschukstrangs,
- Fig. 7: Darstellung des ersten Paares von Formrollen der Ausformeinrichtung von Fig. 3 und Fig. 4 in Seitenansicht gemäß Schnitt VII-VIl von Fig. 4 mit geschlossenem Öffnungsspalt der Formrollen zur Erläuterung der Querschnittserzeugung des profilierten Kautschukstrangs,
- Figuren: 7a, 7b,7c, 7d,7e, 7f Darstellungen des ersten oder zweiten Paares von Formrollen entsprechend der Darstellung von Fig. 7, jedoch mit alternativen Konturen des Öffnungsspaltes zur Erzeugung unterschiedlicher Querschnittsformen,
- Fig. 8: Darstellung des vierten Paares von Formrollen der Ausformeinrichtung von Fig. 3 und Fig. 4 in Seitenansicht gemäß Schnitt VIII-VIII von Fig. 4 mit geschlossenem Öffnungsspalt der Formrollen zur Erläuterung der Querschnittserzeugung des profilierten Kautschukstrangs,
- Fig. 9: Formrollen von Fig. 8 mit zur einen Seite hin geschwenkter oberer Formrolle zur Erläuterung der Herstellung eines im Querschnitt verzerrten Profils des extrudierten Kautschukstrangs,
- Fig. 10: Formrollen von Fig. 8 mit zur anderen Seite hin geschwenkter oberer Formrolle zur Erzeugung eines im Querschnitt zur anderen Seite verzerrten Profils des extrudierten Kautschukstrangs,
- Fig: 11: Seitenansicht des dritten Paares von Formrollen der Ausformeinrichtung von Fig. 3 und Fig. 4 gemäß Schnitt XI-XI von Fig. 4 mit geschlossenem Öffnungsspalt der Formrollen zur Erläuterung der Querschnittserzeugung des profilierten Kautschukstrangs,
- Fig.: 12 Formrollen von Fig. 11 mit zur linken Seite axial verschobener oberer Formrolle zur Erzeugung eines speziell deformierten nahezu z-förmigen Querschnitts des profilierten Kautschukstrangs,

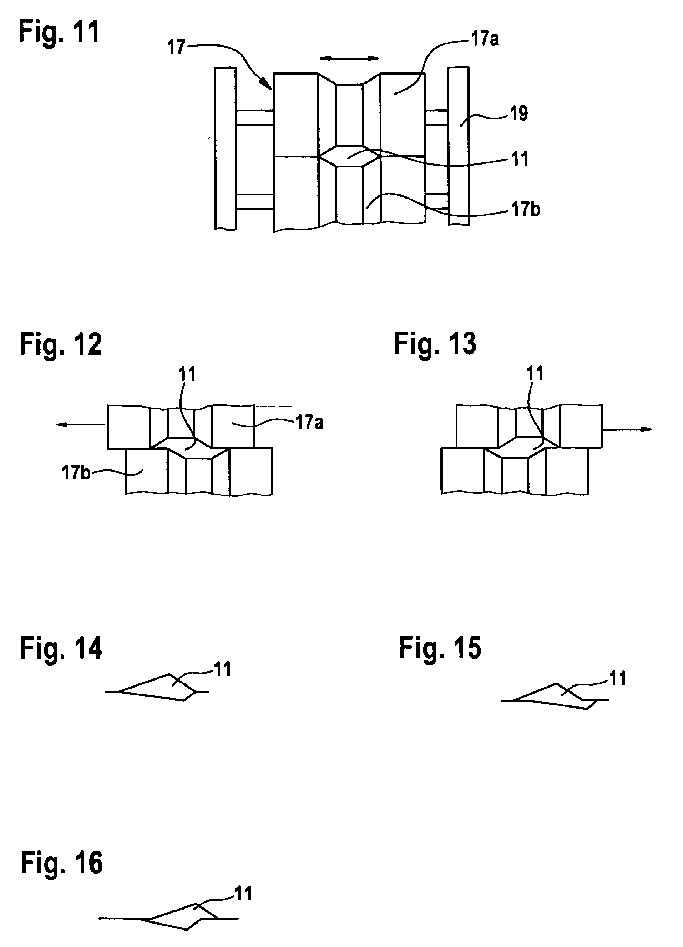

- Fig. 13: Formrollen von Fig. 11 mit zur rechten Seite axial verschobener oberer Formrolle zur Erzeugung eines speziell deformierten gespiegelten nahezu z-förmigen Querschnitts des profilierten Kautschukstrangs,
- Fig. 14: Querschnittsdarstellung der Formkonturen des geschlossenen Öffnungsspalts der in Fig. 11 dargestellten Formrollen mit einer alternativen Formkontur der beiden Formrollen, wobei in Fig. 14 lediglich die Kontur im Öffnungsspalt und die hierdurch bedingte Kontur des Kautschukstrangs dargestellt ist,
- Fig. 15: die Querschnittsdarstellung des geschlossenen Öffnungsspalts der Formrollen gemäß Fig. 14, wobei die obere Formrolle wie in Fig. 12 nach links verschoben ist, und hierdurch bedingtes Querschnittsprofil eines hierdurch profilierten Kautschukstrangs und
- Fig.: 16 die Querschnittsdarstellung des geschlossenen Öffnungsspalts der Formrollen gemäß Fig. 14, wobei die obere Formrolle wie in Fig. 12 nach rechts verschoben ist, und hierdurch bedingtes Querschnittsprofil eines hierdurch profilierten Kautschukstrangs.

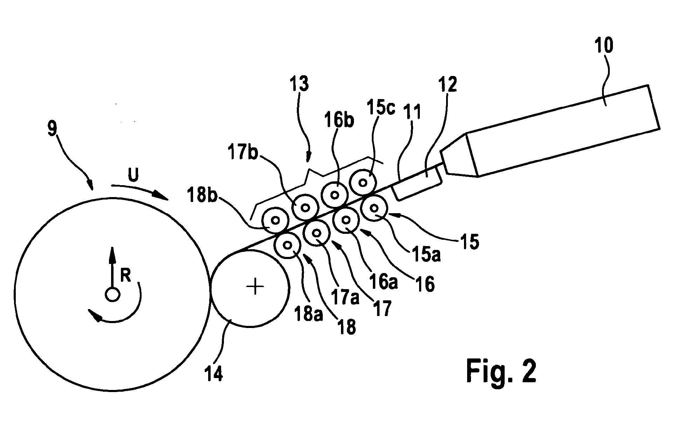

Fig. 2 zeigt in schematischer Darstellung einen Spulkopf mit einem Extruder 10, einem Fördertisch 12, einer Ausformeinrichtung 13 und einer Auflegrolle 14, von dem ein im Extruder 10 erzeugter, beispielsweise rundschnurförmiger profilierter Kautschukstrang 11 kontinuierlich über den Fördertisch 12 durch die Ausformeinrichtung 13 hindurch auf die Auflegerolle 14 geführt wird und von der Auflegerolle 14 in Berührkontakt mit einem gesteuert rotatorisch antreibbaren Aufbaukörper 9, auf dem bereits Aufbaulagen oder - schichten eines Fahrzeugluftreifens aufgebaut sind, zugeführt und angedrückt werden. Durch gesteuertes Verdrehen des Aufbaukörpers 9 wird der zwischen bereits aufgelegter Aufbauschicht und Auflegerolle 14 hindurchgeführte extrudierte profilierte Kautschukstrang 11 auf den Umfang des Aufbaukörpers 9 bzw. auf die auf dem Umfang des Aufbaukörpers bereits aufgelegte Aufbaulagen bzw. -schichten aufgespult. Der Spulkopf wird während des Spulens gesteuert in axialer und radialer Richtung des Aufbaukörpers 9 bewegt, um ganze Reifenaufbauelemente, wie z.B. eine Seitenwand, einen Laufstreifen oder den Teil eines Laufstreifens oder einen Kernreiter, durch Nebenanordnung einzelner Windungen oder durch Überlappen oder Teilüberlappen einzelner, nebeneinander liegende Windungen gezielt konturgerecht aufzubauen.

Der Aufbaukörper 9 ist beispielsweise eine zylindrische Aufbautrommel bekannter Art, auf der bereits Aufbaulagen oder -schichten des Reifens - beispielsweise die Lagen einer Karkasse - aufgelegt sind und auf die dann beispielsweise die Seitenwand aus einem Kautschukstrang aufgespult wird.

In anderer nicht dargestellter, bekannter Ausführung ist der Aufbaukörper 9 ein bereits torusförmig ausgeformter Aufbaukörper, auf dem beispielsweise bereits die torisch ausgeformte Karkasse aufliegt und ggfs. auch die Gürtellagen und die Wulstkerne. Derartige torische ausgeformte Aufbaukörper sind in bekannter Weise beispielsweise konturierte Aufbautrommeln, auf die der Reifenrohling mit allen seinen Bauteilen bereits torisch aufgebaut wird oder auch bekannte segmentierte Aufbautrommeln, auf die die Karkasse und die Wulstkerne in bekannter Weise zunächst zylindrisch aufgebaut werden, bei denen erst nach Aufbau der Karkasse und der Wulstkerne die Segmente radial erweitert und die Wulstkerne axial zusammengeführt werden, um auf diese Weise den torischen Zustand zu erhalten. Ebenso ist in anderer Ausführung der torische Aufbaukörper eine herkömmliche Aufbautrommel mit expandierbarem Balg, bei dem die Karkasse und Wulstkerne zylindrisch aufgebaut werden und der Balg danach in bekannter Weise aufgebläht und unter Zusammenführen der Wulstkerne auf diese Weise torisch ausgeformt wird.

Zur Erzeugung von Laufstreifen auf einem derartig torusförmig ausgeformten Aufbaukörper 9 wird der Spulkopf im Wesentlichen in axialer Richtung des Aufbaukörpers und soweit erforderlich mit geringen radialen Richtungskomponenten bewegt. Zur Erzeugung von Seitenwandbauelementen, z.B. des Seitenwandstreifens auf wird der Spulkopf im Wesentlichen in radialer Richtung des Aufbaukörpers und soweit erforderlich mit soweit zusätzlichen axialen Richtungskomponenten bewegt, so dass der Kautschukstrang von radial innen nach radial außen bzw. - soweit sinnvoll - von radial außen nach radial innen um die Rotationsachse des Aufbaukörpers zur Erzeugung des Seitenwandstreifens aufgespult wird. Der Spulkopf ist zusätzlich in bekannter Weise in seiner Bewegungsebene um den Reifenrohling, um den jeweiligen Auflegepunkt des Kautschukstrangs auf den Aufbaukörper herum gesteuert schwenkbar ausgebildet, so dass der Kautschukstrang während des Spulens jeweils gesteuert mit seiner gewünschten Auflegeseite auf der Oberfläche des Reifenrohling aufgelegt wird.

Der Spulvorgang dauert jeweils unterbrechungsfrei so lange, bis das gewünschte Reifenaufbauelement, wie z.B. eine Seitenwand, einen Laufstreifen oder den Teil eines Laufstreifens oder einen Kernreiter aus dem Kautschukstrang 11 aufgespult ist.

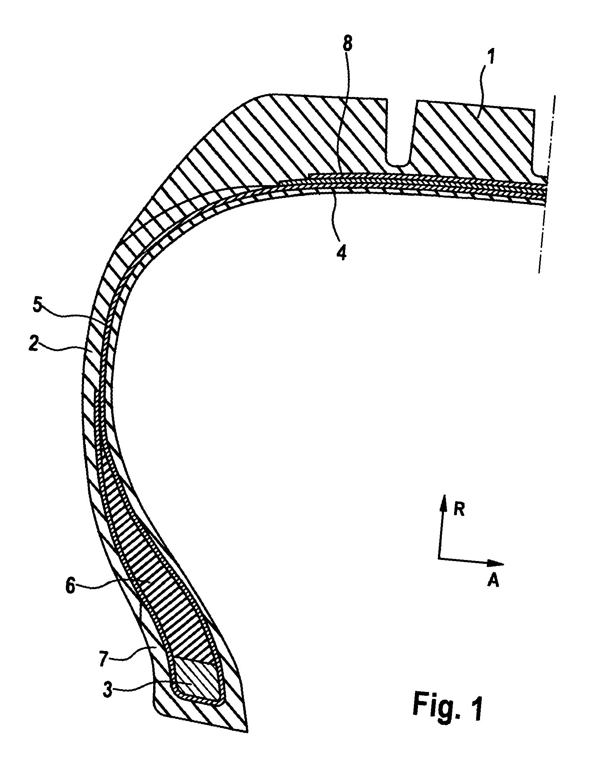

Fig. 1 zeigt im Querschnitt eines auf diese Weise herstellbaren Fahrzeugluftreifens, wobei aus Symmetriegründen lediglich die linke Seite dargestellt ist. Der Fahrzeugluftreifen ist ein Pkw-Reifen bekannter Art mit zwei Wulstkernen 3 zur Befestigung des Fahrzeugluftreifens auf einer Felge mit jeweils einem im Querschnitt dreieckförmigen Kernreiter 6 aus hartem Gummimaterial bekannter Art, der jeweils in radialer Richtung R des Fahrzeugluftreifens außerhalb des Wulstkerns 3 auf den Wulstkern aufgesetzt ist. Der Fahrzeugluftreifen ist mit einer Karkasse 5 radialer Bauart ausgebildet, die in bekannter - nicht dargestellter - Weise aus einer oder mehreren Lagen von übereinander angeordneten Karkassenlagen mit jeweils in Kautschuk eingebetteten parallelen Festigkeitsträgern bekannter Art ausgebildet. Die Karkasse 5 erstreckt sich in bekannter Weise in axialer Richtung A des Fahrzeugluftreifens von Wulstkern 3 zu Wulstkern 3 und ist - ebenso wie der Wulstkern 3 und der Kernreiter 6 - über den gesamten Umfang des Fahrzeugluftreifens erstreckt ausgebildet. Die Karkasse 5 ist dabei auf der zur Innenseite des Fahrzeugluftreifens weisenden Seite entlang und in Berührkontakt zum Kernreiter 6 und zum Wulstkern 3 erstreckt ausgebildet, radial unterhalb des Wulstkerns nach axial außen um den Wulstkern herum geführt und mit einem Umschlagteil auf der axialen äußeren Seite des Fahrzeugluftreifens am Wulstkern 3 und dem Kernreiter 6 entlang bis zum Hauptteil der Karkasse zurückgeführt, wo er endet.

Auf seiner zur Reifeninnenseite weisenden Seite ist der Fahrzeugluftreifen in bekannter Weise mit einer luftdichten Innenschicht 4 aus besonders luftdichtem Kautschukmaterial ausgebildet, die sich über den gesamten Umfang des Fahrzeugluftreifens und in axialer Richtung von Wulstkern 3 zu Wulstkern 3 erstreckt. Auf der vom Fahrzeugluftreifen wegweisenden Außenseite des Wulstkerns 3 ist bis radial unter den Wulstkern 3 reichen jeweils ein Wulstprofil 7 aus Kautschukmaterial bekannter Art ausgebildet, dass sich über den gesamten Umfang des Fahrzeugluftreifens erstreckt und radial oberhalb des Wulstkernes 3 endet. Radial außerhalb des Wulstprofils 7 ist auf der axialen Außenseite des Fahrzeugluftreifens jeweils ein die Reifenseitenwand bildender Seitenwandgummistreifen 2 aus für die Seitenwand geeignetem Kautschukmaterial bekannter Art ausgebildet, die sich über den gesamten Umfang des Fahrzeugluftreifens und vom Wulstprofil 7 nach radial außen bis unter den Laufstreifen 1 des Fahrzeugluftreifens erstreckt.

In Fig. 1 dargestellt ist oberhalb der Karkasse und unterhalb des Laufstreifens 1 ein Gürtel 8 aus zwei Gürtellagen bekannter Art ausgebildet, die sich jeweils über den gesamten Umfang des Fahrzeugluftreifens und in axialer Richtung A des Fahrzeugluftreifens über die gesamte Aufstandsbreite des Fahrzeugluftreifens von Reifenschulter zu Reifenschulter hin erstrecken. Die Gürtellagen sind in bekannter Art jeweils aus in Kautschuk eingebetteten parallelen Festigkeitsträgern aus Stahl oder Aramid ausgebildet mit einem für Gürtellagen üblichen eingeschlossenen Winkel ihrer Ausrichtung von 20° bis 60° zur Umfangsrichtung. Der Gürtel 8 ist - in nicht dargestellter Weise - im Gürtelkantenbereich jeweils zusätzlich mit die Gürtellagen überdeckenden Abdeckstreifen aus in Kautschuk eingebetteten Nylonkorden ausgebildet, die sich im Wesentlichen in Umfangsrichtung erstrecken. Oberhalb des Gürtels ist in bekannter Weise ein Laufstreifen 1 aus für den Laufstreifen geeignetem Kautschukmaterial bekannter Art ausgebildet, der sich über den gesamten Umfang des Fahrzeugluftreifens und in axialer Richtung über den Gürtel 8 hinweg bis zu den Seitenwänden 2 erstreckt und diese beispielsweise - wie in Fig. 1 dargestellt - überlappt.

Wie in Fig.2, Fig.3 und Fig.4 dargestellt, ist die Ausformeinrichtung 13 aus in Förderrichtung des z.B. rundschnurförmig extrudierten Kautschukstrangs 11 beispielsweise vier hintereinander angeordneten Formrollenpaaren 15, 16, 17, 18 ausgebildet, wobei das Formrollenpaar 15 aus einer oberen Formrolle 15a und einer unteren Formrolle 15b, das Formrollenpaar 16 aus einer oberen Formrolle 16a und einer unteren Formrolle 16b, das Formrollenpaar 17 aus einer oberen Formrolle 17a und einer unteren Formrolle 17b und das Formrollenpaar 18 aus einer oberen Formrolle 18a und einer unteren Formrolle 18b besteht.

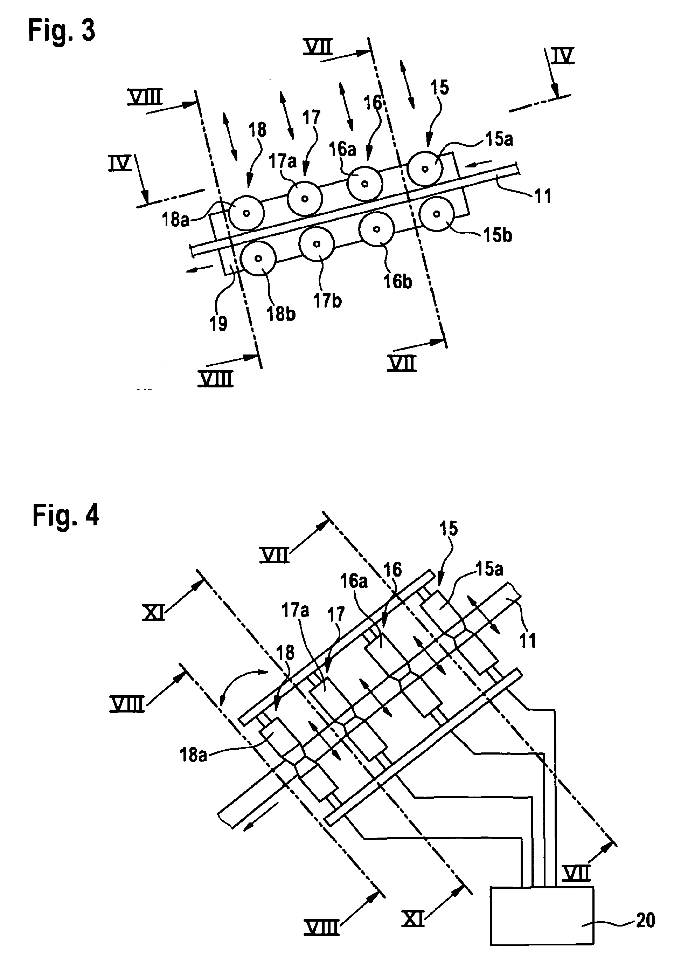

Die Formrollen 15a, 15b, 16a, 16b, 17a, 17b, 18a und 18b sind dabei jeweils mit parallelen Rotationsachsen in einem Rahmen 19 der Ausformeinrichtung 13 drehbar gelagert, wobei die unteren Formrollen 15b, 16b, 17b und 18b in ihrer Position im Rahmen 19 fest drehbar gelagert sind und die oberen Formrollen 15a, 16a, 17a und 18a im Rahmen 19 - wie in Fig. 3 durch Pfeile dargestellt - senkrecht zur Förderrichtung des Kautschukstrangs 11 und senkrecht zur gemeinsamen Ebene der Drehachsen der unteren Förderrollen 15b, 16b, 17b und 18b nach unten in Richtung auf die jeweils zugeordnete untere Formrolle 15b, 16b, 17b bzw. 18b hin und von dieser unteren Formrolle 15b, 16b, 17b, 18b wieder nach oben weg verschiebbar gelagert sind. Die vier oberen Formrollen 15a, 16a, 17a und 18a sind jeweils mit einer Stelleinrichtung bekannter Art - beispielsweise einem nicht dargestellten gesteuerten Pneumatikzylinder - zum Anheben von der jeweils zugehörigen unteren Formrolle 15b, 16b, 17b bzw. 18b in eine Ruheposition und zum Absenken auf die jeweils untere zugehörige untere Formrolle 15b, 16b, 17b bzw. 18b in die Arbeitsposition in Stellverbindung, wobei dieser Stelleinrichtung mit einem Steuerrechner 20 bekannter Art in Steuerverbindung stehen. Die unteren Formrolle 15b, 16b, 17b bzw. 18b sind jeweils rotatorisch antreibbar ausgebildet und stehen zur ausformenden Förderung des Kautschukstranges 11 durch das jeweilige Formrollenpaar 15,16,17 bzw. 18 jeweils mit einer vom Steuerrechner 20 bekannter Art gesteuerten Antriebseinrichtung mit Motor und Getriebe bekannter Art in Antriebsverbindung.

Die obere Formrolle 17a des Formrollenpaars 17 ist zusätzlich im Rahmen 19 parallel zu seiner und zur Drehachse der unteren Formrolle 17b verschiebbar gelagert und steht mit einer nicht dargestellten Verschiebeeinrichtung - beispielsweise einem weiteren Pneumatikzylinder - zum gesteuerten Verschieben bekannter Art in Wirkverbindung. Die Verschiebeeinrichtung steht zum gesteuerten Verschieben der Formrolle 17a gegenüber der unteren Formrolle 17b ebenfalls in Steuerverbindung zum Steuerrechner 20.

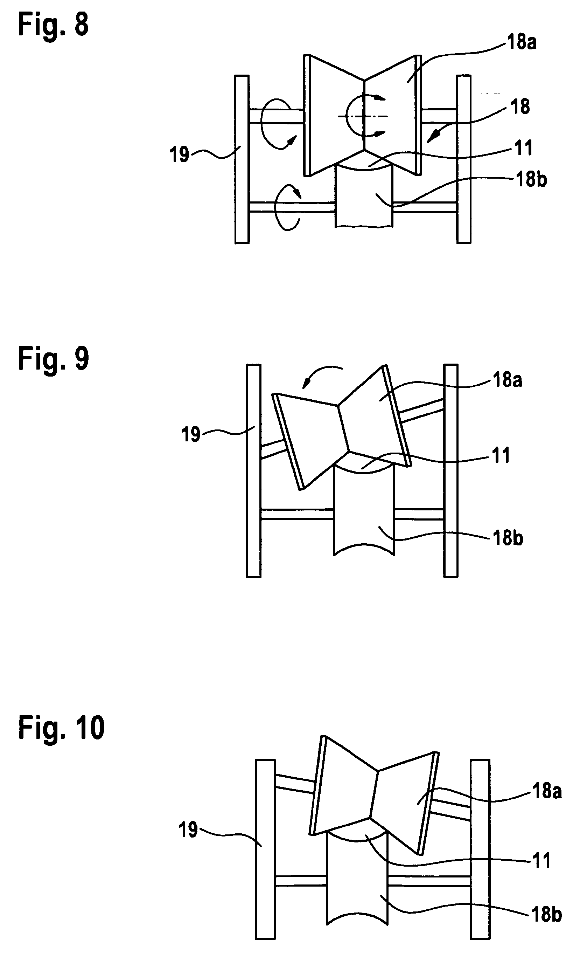

Die obere Formrolle 18a des vierten Formrollenpaares 18 ist - wie in Fig.8, Fig.9 und Fig.10 dargestellt - zusätzlich im Rahmen 19 um eine die Drehachse der Formrolle 18a schneidende parallel zur Förderrichtung des Kautschukstrangs 11 ausgerichtete Schwenkachse schwenkbar gelagert und steht mit einer nicht dargestellten Schwenkeinrichtung bekannter Art zum gesteuerten Verschwenken in Wirkverbindung. Beispielsweise ist hierzu auf beiden Seiten der Formrolle 18a im Rahmens 19 jeweils ein zusätzlicher Pneumatikzylinder bekannter Art ausgebildet. Beide Pneumatikzylinder stehen mit dem Steuerrechner 20 in Steuerverbindung. Die beiden Pneumatikzylinder stehen jeweils mit der Drehachse der oberen Formrolle 18a in Verbindung und sind so angeordnet und gesteuert, dass die Drehachse der Formrolle 18a mit ihrem einen axialen Ende an der einen Seite des Rahmens 19 jeweils in entgegengesetzter Richtung zu dem anderen axialen Ende der Drehachse an der anderen Seite angehoben bzw. abgesenkt werden. Auf diese Weise kann die obere Formrolle 18a gesteuert aus der zur unteren Formrolle 18b parallelen Ausrichtung, die in Fig. 8 dargestellt ist, nach der einen Seite - wie in Fig. 9 dargestellt ist - oder nach der anderen Seite - wie in Fig. 10 dargestellt ist - verschwenkt werden.

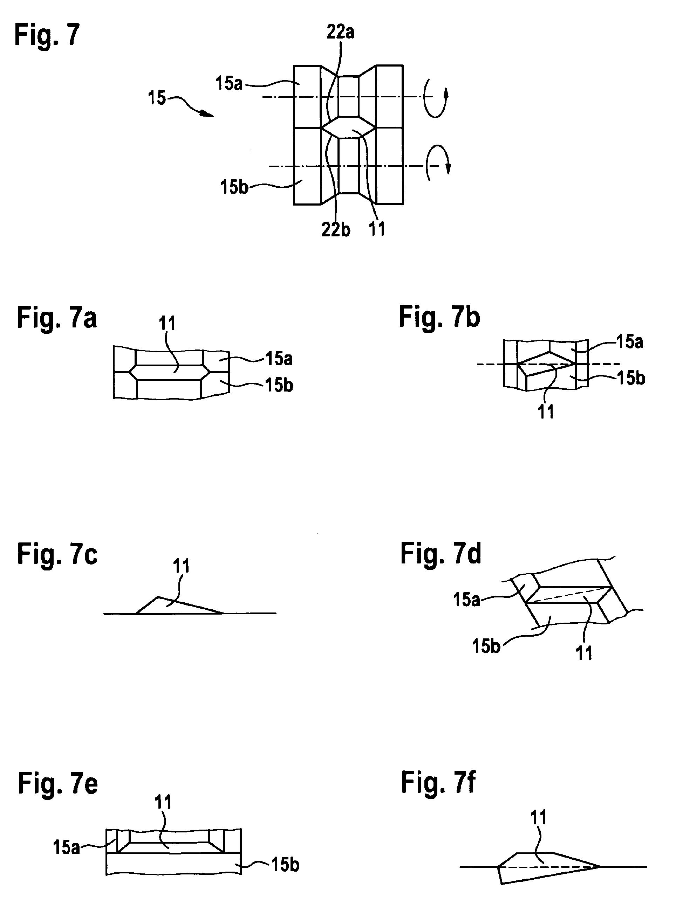

Die Formrollen 15a, 16a, 17a und 15b, 16b, 17b der Formrollenpaare 15, 16 und 17 sind - wie in den Figuren 7,7a,7b,7c,7d,7c,7f,11 dargestellt - mit zylindrischen Mantelflächen ausgebildet, wobei jeweils im axial mittleren Erstreckungsbereich von einer oder von beiden Formrollen eines jeden dieser Formrollenpaare 15, 16 und 17 eine über den Umfang der Formrolle erstreckte Nut ausgebildet ist. Die Querschnittskontur der Nut bzw. der beiden Nuten eines Formrollenpaares 15, 16 bzw. 17 ist dabei so abgestimmt und axial positioniert, dass sobald die obere Formrolle 15a, 16a, bzw. 17a, in Berührkontakt auf die untere Formrolle 15b, 16b bzw. 17b gesteuert zu bewegt wird, jeweils beiderseits der Nut ein schließender Berührkontakt zwischen den beiden Formrollen des Formrollenpaares 15,16 bzw. 17 hergestellt wird und im Bereich der von jeweils oberer Rolle 15a und unterer Rolle 15b bzw. oberer Rolle 16a und unterer Rolle 16b bzw. obere Rolle 17a und unterer Rolle 17b eines Rollenpaares 15,16 bzw. 17 ausgebildeten Nut bzw. Nuten bei Einsatz nur einer Nut in einem Rollenpaar 15,16 bzw. 17 durch die Querschnittform der Nut der einen Rolle und durch die zylindrischen Mantelfläche der anderen Rolle und bei Ausbildung mit jeweils einer Nut in jeder der beiden Rollen eines Rollenpaares durch die beiden Nuten ein Durchgangskanal mit definierter Kanalquerschnittskontur verbleibt. Diese Kanalquerschnittskontur eines Formrollenpaares wird im Folgenden auch als Öffnungsquerschnitt bezeichnet.

Wie in Fig.8 dargestellt ist, ist die Formrolle 18a des Formrollenpaares 18 mit einer Mantelfläche mit im Querschnitt v-förmiger über den Umfang der Formrolle 18a erstreckter Nut ausgebildet. Die Formrolle 18b des Formrollenpaares 18 ist mit einer Mantelfläche mit im Querschnitt u-förmiger über den Umfang der Formrolle 18a erstreckter Nut ausgebildet. Die obere Formrolle 18a ist in ihrer Erstreckungsbreite, die in Erstreckungsrichtung ihrer Drehachse gemessen wird, größer ausgebildet als die untere Formrolle 18b. Die u-förmige Nut der unteren Formrolle18b erstreckt sich über die gesamte axiale Erstreckung der unteren Formrolle 18b. Die v-förmige Nut der oberen Formrolle18a erstreckt sich ebenfalls über die gesamte axiale Erstreckung der oberen Formrolle 18a. Die Querschnittskontur der der beiden Nuten des Formrollenpaares 18 ist so abgestimmt und axial positioniert, dass sobald die obere Formrolle 18a in Berührkontakt auf die untere Formrolle 18b gesteuert zu bewegt wird, jeweils beiderseits der Nut der unteren Formrolle 18b ein schließender Berührkontakt zwischen den beiden Formrollen 18a und 18b des Formrollenpaares 18 hergestellt wird und im Bereich der von oberer Rolle 18a und unterer Rolle 18b zwischen den Berührkontaktstellen ausgebildeten Nuten durch die beiden Nuten ein Durchgangskanal mit definierter Kanalquerschnittskontur bzw. Öffnungsquerschnitt verbleibt.

Der Extruder, die Extruderleistung und die Konturen der Mantelflächen der Formrollen der Formrollenpaare 15,16,17 und 18 sind dabei jeweils so abgestimmt, dass das Volumen des extrudierten Kautschukmaterials mindestens so groß ist, dass es beim Durchleiten des Kautschukstranges durch den Öffnungsquerschnitt eines Formrollenpaares 15,16,17 bzw. 18 der Öffnungsquerschnitt vollständig ausgefüllt ist.

Die vier in Förderrichtung des Kautschukstranges 11 hintereinander angeordneten Formrollenpaare 15, 16, 17, 18 sind mit den Mantelflächen ihrer Formrollen 15a,15b,16a,16b,17a,17b,18a und 18b dabei so zu einander abgestimmt ausgebildet, dass der durch die jeweils obere und untere Formrolle 15a und 15b bzw. 16a und 16b bzw. 17a und 17b bzw. 18a und 18b der einzelnen Formrollenpaare 15,16,17 bzw.18 bedingte Öffnungsquerschnitt des jeweiligen Durchgangskanals bei geschlossenen Formrollenpaaren jeweils mit unterschiedlicher Querschnittskontur ausgebildet ist, die jeweils einer für eine bestimmte Position einer Windung des aufzuspulenden Kautschukstrangs 11 zur Erzeugung des Reifenaufbauteils optimierten Querschnittskontur entspricht.

Beispielsweise ist das erste Formrollenpaar 15 oder das zweite Formrollenpaar 16 - wie in Fig. 7 am Beispiel des ersten Formrollenpaares 15 dargestellt - an ihren Formrollen 15a und 15b mit zwei identischen Nuten mit im Querschnitt schräg verlaufenden Nutwänden und drehachsparallelem Nutboden ausgebildet, die hierdurch den in Fig. 7 dargestellten Durchgangskanal bildet und somit die hierdurch erzeugte Querschnittskontur eines durch den Durchgangskanal geleiteten Kautschukstranges 11 mit einem durch zwei aufeinander gespiegelten Trapezen gebildeten sechseckigen Querschnitt erzeugt.

Die Figuren 7a, 7b, 7c, 7d, 7e, 7f zeigen beispielhaft unterschiedliche alternative Formkonturen der Formrollen am Beispiel des ersten Formrollenpaares 15 und des zweiten Formrollepaares am Beispiel des ersten Formrollenpaares 15.

Fig. 7a zeigt eine gegenüber der in Fig. 7 dargestellten Ausbildung in axialer Richtung der Formrollen 15a und 15b verbreiterte Ausbildung der Nuten und eine hierdurch gebildete Kontur des Durchgangskanals und der hierdurch erzeugten Kontur des ausgeformten Kautschukstrangs 11, die ebenfalls sechseckig aber flacher ist. Der hierdurch ausgeformte Kautschukstrang 11 ist ein flaches Band mit an beiden Rändern des Bandes ausgebildeten Dreieckformen.

Fig. 7b und Fig. 7d zeigt eine Ausführung, bei der die Nuten in ihrem Querschnitt dreieckförmig ausgebildet sind mit in axialer Richtung der Formrollen 15a bzw. 15b gegeneinander versetzten Positionen der Dreieckspitzen. Der Durchgangskanal hat hierdurch einen durch die Wahl der Position der Dreieckspitzen bestimmten viereckigen Öffnungsquerschnitt. Fig. 7b zeigt die Ausbildung einen Öffnungsquerschnitt und somit einen Querschnitt des ausgeformten Kautschukstranges mit einem unregelmäßigem Viereck. Fig. 7d zeigt die Ausbildung einen Öffnungsquerschnitt und somit einen Querschnitt des ausgeformten Kautschukstranges mit einem Parallelogramm.

Fig. 7c zeigt eine alternative Ausbildung, bei der zur Vereinfachung lediglich die eine dreieckig erzeugte Querschnittskontur eines Kautschukstrangs 11 dargestellt ist. In dieser Ausführung ist die untere Formrolle 15b ohne Nut und die obere Formrolle 15a v-förmig ausgebildet, wodurch der Durchgangskanal und der Kautschukstrang 11 die dargestellte dreieckige Querschnittskontur erhält.

Fig. 7e zeigt eine Ausbildung, bei der - wie bei der Ausbildung von Fig. 7c - nur die obere Formrolle 15a mit einer Nut mit einem Nutquerschnitt wie beim Ausführungsbeispiel von Fig. 7a und die untere Formrolle 15b ohne Nut ausgebildet ist. Bei dieser Ausbildung erhält der Durchgangskanal des Formrollenpaares 15 eine viereckige - im dargestellten Ausführungsbeispiel - trapezförmige Querschnittskontur und somit der darin ausgeformte Kautschukstrang 11 eine viereckige - im dargestellten Ausführungsbeispiel - trapezförmige Kontur eines flachen Bandes.

Fig. 7f zeigt eine Ausbildung, bei der die untere Formrolle 15b eine v-förmige Nut und die obere Formrolle 15a eine Nut ausgebildet ist, die wie bei dem in Fig.7 dargestellten Ausführungsbeispiel jedoch mit unterschiedlich geneigten Nutwänden ausgebildet ist, wodurch der Durchgangskanal und der gezeigte ausgeformte Kautschukstrang 11 eine fünfeckige Querschnittskontur aufweist.

Auch die Formrollen 17a und 17b des dritten Formrollenpaares 17 sind beispielsweise in einer im Zusammenhang mit Fig. 7, 7a, 7b, 7c, 7d, 7e, 7f dargestellten und erläuterten Weise profiliert ausgebildet.

Fig. 11 zeigt ein Formrollenpaar 17, das beispielsweise mit den in Fig.7 dargestellten konturierten Nuten ausgebildet ist, und bei dem die Nuten - wie in Fig. 7 dargestellt - so übereinander angeordnet positioniert sind, dass die beiden durch die Nuten gebildeten Trapeze ihres Nutenquerschnitts exakt aufeinander positioniert sind, wodurch der gebildete Durchlasskanal bei geschlossenem Formrollenpaar 17 und somit die Querschnittskontur des im Formrollenpaar 17 ausgeformten Kautschukstrangs, die bereits aus Fig. 7 bekannte sechseckförmige konturierte Profilierung erhält.

Soweit gewünscht, wird zur gezielten Veränderung des konturierten Durchlasskanals und somit der Querschnittskontur des Kautschukstrangs 11 die obere Rolle 17a - wie in Fig. 12 dargestellt - gesteuert nach links verschoben positioniert oder - wie in Fig. 13 dargestellt - gesteuert nach rechts verschoben positioniert. Hierdurch wird der durch die in der oberen Rolle 17a ausgebildeten Nut bedingte obere Querschnittsteil des Durchlasskanals entsprechend dem Maß der Verschiebung nach links - wie in Fig. 12 dargestellt - oder nach rechts - wie in Fig. 13 dargestellt - verschoben, wodurch eine gezielte deformierte, z-förmige Querschnittskontur des Kautschukstrangs 11 eingestellt wird.

Fig. 14 zeigt eine alternative Ausbildung des Rollenpaares 17, bei der zur Vereinfachung lediglich die erzeugte Querschnittskontur eines Kautschukstrangs 11 dargestellt ist, mit gegenüber Fig.1 alternativer Konturierung der Nuten der oberen Rolle 17a und unteren Rolle 17b, wobei im Ausführungsbeispiel von Fig. 14 beide Nuten im Querschnitt dreieckförmig ausgebildet sind, wobei die Basis der beiden Dreiecke - im dargestellten Beispiel - gleich groß und bei geschlossenem Rollenpaar 17 deckungsgleich ist und die auf der Basis gebildete Höhe der beiden Dreiecke unterschiedlich groß gewählt ist. Fig. 15 zeigt den Durchlasskanal und die erzeugte Querschnittskontur des profilierten Kautschukstrangs 11 bei nach links verschobener und Fig. 16 bei nach rechts verschobener oberer Formrolle 17a.

Wie in den Figuren 11 bis 16 deutlich erkennbar ist, kann mit Hilfe des Formrollenpaares 17 durch einfaches gesteuertes Verändern der axialen Position in Richtung und des Ausmaßes der Verschiebung der oberen Führungsrolle 17a vor und während des Herstellungsprozesses ein großes Spektrum an unterschiedlichen zum Teil komplexen Querschnittskonturen des profilierten Kautschukstrangs 11 eingestellt werden.

Fig. 8 zeigt das vierte Formrollenpaar 18 im geschlossenen Zustand. In diesem Ausführungsbeispiel ist die obere schwenkbare Formrolle 18a in ihrer axialen Erstreckung breiter gewählt als die untere Formrolle 18b und die in der oberen Formrolle 18a ausgebildete Nut ist in diesem Ausführungsbeispiel eine Nut mit V-förmigem Querschnitt, die sich in ihrer axialen Erstreckungsbreite über die gesamte axiale Erstreckungsbreite der unteren Formrolle 18b hinweg erstreckt und im geschlossen Zustand somit mit der durch die v-Form der Nut bedingten doppelkonusförmigen Querschnittskontur auf den axial äußeren Rändern der Mantelfläche der Formrolle 18b aufliegt. Die untere Formrolle 18b ist mit einer zwischen diesen Aufliegepunkten und über den Umfang der unteren Formrolle 18b erstreckten u-förmigen Nut ausgebildet. Wie in Fig. 8 zur erkennen ist, wird hierdurch zwischen der oberen Formrolle 18a und der unteren Formrolle 18b im geschlossenen Zustand des Formrollenpaares 18 ein Durchlasskanal und somit beim Hindurchführen eines Kautschukstranges 11 ein profilierter Querschnitt des Kautschukstranges 11 erzeugt, die in seiner unteren Querschnittsbereich linsenförmig ausgebildet ist, in seinem oberen Querschnittsbereich nicht linsenförmig gewölbt, sondern dach- bzw. dreickförmig ausgebildet ist.

Wie in den Figuren 9 und 10 dargestellt ist, wird im vierten Formrollenpaar 18 durch gesteuertes Verschwenken der oberen Formrolle 18a nach links bzw. nach rechts der Durchgangkanals und somit die Querschnittkontur eines durch das Formrollenpaar 18 in geschlossenem Zustand hindurch geförderten Kautschukstrangs 11 gezielt einstellbar deformiert, wobei die Spitze des Dreiecks entweder nach links beim Verschwenken nach links - wie in Fig. 9 dargestellt ist - oder nach rechts beim Verschwenken nach rechts - wie in Fig. 10 dargestellt ist - gegenüber der in Figur 8 dargestellten Einstellung geneigt wird.

In alternativer - nicht dargestellter - Ausführung ist die untere Formrolle 18b mit alternativ ausgebildeter Nutkontur ausgebildet. Beispielsweise ist die Nut der Formrolle in einer der in den Figuren 7 bis 16 dargestellten Nutkontur ausgebildet. In anderer Ausführung ist die untere Formrolle 18b ohne Nut ausgebildet.

In alternativer - nicht dargestellter - Ausführung ist die obere Formrolle 18a mit alternativ ausgebildeter Nutkontur ausgebildet. Beispielsweise ist die obere Formrolle 18a mit einer Nut mit ausgebildet, deren Querschnittkontur - wie in Fig. 7 dargestellt - trapezförmig ausgebildet ist.

Wie in den Figuren 8 bis 10 deutlich erkennbar ist, kann mit Hilfe des vierten Formrollenpaares 18 durch einfaches in Richtung und Maß gesteuertes Verschwenken der oberen Formrolle 18a vor und während des Herstellungsprozesses ein großes Spektrum an unterschiedlichen zum Teil Querschnittskonturen des profilierten Kautschukstrangs 11 eingestellt werden.

Die Ausformung des im Extruder 10 z.B. rundschnurförmig extrudierten und über den Fördertisch 12 an die Ausformeinrichtung 13 kontinuierlich heran geförderten Kautschukstranges 11 in der Ausformeinrichtung 13 erfolgt derart, dass der Kautschukstrang 11 durch alle vier Formrollenpaare 15, 16, 17 und 18 jeweils zwischen oberer Formrolle 15a,16a,17a,18a und unterer, gesteuert angetriebener Formrolle 15b,16b,17b,18b hin durch geführt wird, wobei jeweils nur dasjenige Formrollenpaar 15,16, 17 oder 18 mit seiner oberen und unteren Formrolle soweit durch Verschieben der oberen Formrolle zur unteren Formrolle hin geschlossen ist und der Kautschukstrang 11 durch den bei geschlossenem Formrollenpaar 15, 16, 17 bzw. 18 gebildeten Öffnungskanal hin durch gezwängt und somit ausgeformt wird, dessen Querschnittskontur von der Querschnittskontur des durch Aufspulen herzustellenden Reifenbauteils für den Kautschukstrang 11 gerade erfordert wird. Die anderen drei Formrollenpaare 15, 16, 17 bzw. 18 sind dabei soweit geöffnet, d.h. die obere Formrolle des jeweiligen Formrollenpaares 15, 16, 17 bzw. 18 so weit von der unteren Formrolle 15b,16b,17b bzw.18b angehoben, dass der Kautschukstrang 11 ohne formenden Einfluss, mit Spiel und ohne Kontakt zumindest zur oberen Formrolle 15a,16a,17a bzw.18a durch den zwischen oberer Formrolle 15a,16a,17a bzw.18a und unterer Formrolle 15b,16b,17b bzw.18b gebildeten Spalt hindurchgezogen wird. Das geschlossene Formrollenpaar fördert dabei jeweils gesteuert durch die gesteuert angetriebene Formrolle den Kautschukstrang 11 durch die Ausformeinrichtung.

Sobald während des Spulens des Kautschukstrangs 11 für einen bestimmten Spulabschnitt des Kautschukstrangs 11 ein geänderter Querschnitt des gleichen Kautschukstrangs 11 gewünscht ist, wird dasjenige Formrollenpaar 15, 16, 17 bzw. 18 , das den neu einzustellenden Durchlasskanal aufweist, durch gesteuertes Absenken seiner oberen Formrolle 15a,16a,17a bzw.18a auf die untere Formrolle 15b,16b,17b bzw.18b soweit abgesenkt, dass die obere und die untere Formrolle dieses neu gewählten Formrollenpaares 15, 16, 17 bzw. 18 mit ihrer oberen und unteren Umfangsnut den gewünschten geschlossenen Durchlasskanal bilden und beiderseits des Kanals aufeinander in Berührkontakt stehen. Sobald während des Absenkens der oberen Formrolle 15a,16a,17a bzw.18a die obere Formrolle 15a,16a,17a bzw.18a und die untere Formrolle 15b,16b,17b bzw.18b in Berührkontakt mit dem Kautschukstrang 11 gelangen, wird vom Steuerrechner über den zuständigen Stellzylinder die obere Formrolle 15a,16a,17a bzw.18a des bis dahin ausformenden, alten Formrollenpaares 15, 16, 17 bzw. 18 langsam gesteuert geöffnet, so dass nach vollständigem Schließen des neu zur Ausformung gewählten Formrollenpaares 15, 16, 17 bzw. 18 das alte, bis dahin ausformende Formrollenpaares 15, 16, 17 bzw. 18 ohne weitere ausformende Wirkung vollständig geöffnet ist.

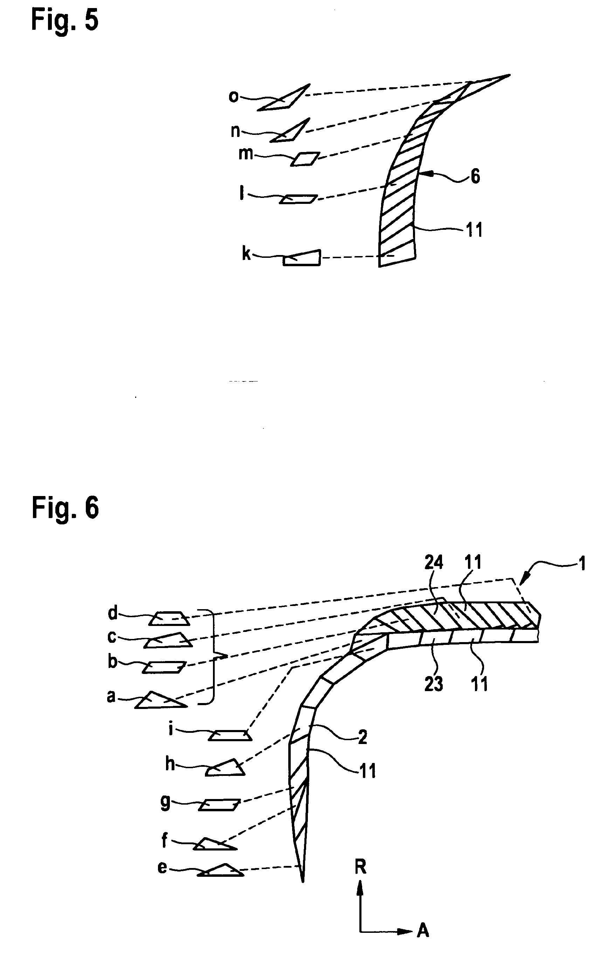

Fig. 6 zeigt ein Ausführungsbeispiel eines Laufstreifens 1, das in bekannter Weise aus einer radial inneren als Base bezeichneten Schicht 23 eines ersten Kautschukmaterials und einer radial äußeren als Cap bezeichneten Schicht 24 eines zweiten Kautschukmaterials ausgebildet ist und einen Seitenwandgummistreifen 2, die jeweils auf eine torusförmig auf einer konturierten Aufbautrommel 9 aufgebauten nicht dargestellten Karkasse aufgespult werden. Zur Vereinfachung ist in Fig. 6 lediglich der Seitenwandgummistreifen 2 und der Laufstreifen 1 mit Base 23 und Cap 24 dargestellt sind. Dabei werden sowohl der Seitenwandgummistreifen2 als auch die Base 23 und die Cap 24 jeweils durch Spulen eines extrudierten Kautschukstranges 11 erzeugt.

Am Beispiel der Cap 24, die als letzte Aufbauschicht, d.h. nach dem Aufspulen des Seitenwandgummistreifens 2 und der Base 23 aufgespult wird, wird die Ausformung des aufzuspulenden Kautschukstranges 11 mit Hilfe der vier hintereinander angeordneten Formrollenpaare 15, 16, 17 und 18 der Ausformeinrichtung 13 beschrieben. In diesem Beispiel ist das erste Formrollenpaar 15 mit Umfangsnuten seiner Formrollen 15a,15b ausgebildet, die einen Durchgangskanal bilden, der in Fig. 7c dargestellt ist. Das zweite Formrollenpaar 16 ist mit Umfangsnuten seiner Formrollen 16a,16b ausgebildet, die einen parallelogrammförmigen Durchgangskanal bilden, wie er beispielsweise in Fig. 7d dargestellt und erläutert ist. Das dritte Formrollenpaar 17 ist mit Umfangsnuten seiner Formrollen 17a, 17b ausgebildet, die einen Durchgangskanal bilden, der in Fig. 7b dargestellt ist. Das vierte Formrollenpaar 18 ist mit einer oberen Formrolle 18a mit einer Nut mit trapezförmigem Querschnitt und die untere Formrolle 18b ohne Nut mit rein zylindrischer Mantelfläche ausgebildet, so dass sie im unverschwenkten Zustand von Fig.8 einen rein trapezförmigen Durchgangskanal und somit eine trapezförmige Querschnittskontur des Kautschukstranges 11 erzeugt.

Beim Spulen des Kautschukstrangs 11 zur Herstellung der Cap 24 auf die sich überlappenden bereits aufgebauten Seitenwandgummistreifen 2 und Base 23 in axialer Richtung A des Reifens von der in Fig. 6 linken Seite ausgehend nach rechts wird der extrudierte Kautschukstrang 11 zunächst bei geschlossenem Formrollenpaar 15 und geöffneten Formrollenpaaren 16, 17 und 18 durch die Ausformeinrichtung 13 hindurch geführt und von der Auflegerolle 14 auf die Aufbautrommel 9 aufgelegt. Hierdurch wird der Kautschukstrang mit der im Bereich der ersten Windung zum Aufbau der Cap gewünschten dreieckförmigen Kontur a des Kautschukstranges 11 in der ersten Windung aufgelegt. Wie in Fig. 6 zu erkennen ist, ist wenige Windungen später eine optimierte Kontur b des Kautschukstranges 11 gewünscht, deren Querschnitt parallelförmig ausgebildet ist. Daher wird nach Aufspulen der ersten Windung bis zum Aufspulen der vierten Windung langsam das zweite Formrollenpaar 16 geschlossen und währenddessen das erste Formrollenpaar 15 langsam geöffnet. In diesem sich über ungefähr zwei Windungen hinweg ziehenden, sich überlappenden Öffnungs- und Schließvorgang der beiden Formrollenpaare 15 und 16 wird langsam und kontinuierlich der zur Aufbautrommel geförderte Kautschukstrang 11 aufgrund des zunehmenden Wirkeinflusses des Formrollenpaares 16 und des abnehmenden Wirkeinflusses des Formrollenpaares 15 hinsichtlich seiner Kontur der gewünschten Querschnittskontur b angenähert, die beim Aufspulen der vierten Windung erreicht ist. Wie in Fig. 6 deutlich zu erkennen, ist wenige Windungen später eine trapezförmige Kontur c die optimiert gewünschte Kontur des aufzuspulenden Kautschukstrangs 1 1. Somit wird während des folgenden Spulprozesses das Formrollenpaar 17 langsam geschlossen und das Formrollenpaar 16 dabei langsam geöffnet. Dieser Schließ- und Öffnungsprozess der beiden Formrollenpaare 17 und 16 überlappt sich wiederum über mehrere Windungen hinweg, so dass der aufzuspulende Kautschukstrang 11 fließend seine Querschnittskontur aus der parallellogrammähnlichen Form b in die viereckige Form c verändert und diese viereckige Form c beim Bespulen der Windung der für die Form c gewünschten Position erreicht. Wie in Fig. 6 zu erkennen, ist wenige Windungen später die regelmäßige Trapezform d die gewünschte optimierte Kontur des aufzuwickelnden Kautschukstrangs 11. Somit wird das Formrollenpaar 18 im weiteren Spulvorgang langsam geschlossen und dabei das Formrollenpaar 17 langsam geöffnet. Somit erfolgt während der Windungen bis zum Erreichen der Positionierung des Kautschukstrangs 11 mit der optimierten Kontur der regelmäßigen Trapezform d, der Kautschukstrang 11 in seiner Querschnittskontur langsam von der Konturform c in die Konturform d fließend geändert, die er rechtzeitig beim Aufspulen der mit Trapezform d beabsichtigten Windung erreicht.

Auf diese Weise wird die Cap-Lage 24 des Laufstreifens unter gesteuerter Veränderung des Querschnitts des aufzuspulenden Kautschukstrangs 11 entsprechend den an die Querschnittsform der Cap-Lage 24 optimierten Querschnittsverläufen des Kautschukstrangs 11 gesteuert verändert.

Ebenso werden zuvor der Seitenwandgummistreifen 2 und die Base 11 aus einem jeweils hierfür geeigneten extrudierten Kautschukstrang 11 mit einen derartigen Spulkopf mit einer Ausformeinrichtung 13 mit mehreren hintereinander angeordneten Formrollenpaaren 15,16,17 und 18 konturgerecht aufgespult.

Zur Herstellung des Seitenwandgummistreifens 2 ist beispielsweise die obere Formrolle 15a des Formrollenpaares 15 wie in Fig. 7 dargestellt ausgebildet, die untere Formrolle 15b ist zylindrisch ohne Nut ausgebildet. Der Durchgangskanal und somit die Querschnittskontur des darin ausgeformten Kautschukstranges 11 ist trapezförmig. Das Formrollenpaar 16 ist - wie in Fig. 7b dargestellt - an ihrer oberen 16a und an ihrer unteren Formrolle 16b jeweils mit einer dreiecksförmigen Nut ausgebildet und bildet somit einen bestimmten viereckförmigen Durchgangskanal und somit auch Querschnittskontur des darin ausgeformten Kautschukstranges 11. Das Formrollenpaar 17 ist, wie in Fig. 7d dargestellt, zur Erzeugung eines parallellogrammartigen Querschnitts ausgebildet. Das Formrollenpaar 18 ist mit einer oberen Formrolle 18a, wie in Fig. 8 dargestellt, und mit einer unteren Formrolle 18b mit zylindrischer Mantelfläche ausgebildet und bildet somit eine dreiecksförmigen Durchgangskanal, wobei die anfängliche Arbeitsposition - wie in Fig. 10 dargestellt - die mit einer nach rechts verschwenkten, oberen Formrolle 18a ist.

Wie in Fig. 6 dargestellt ist, ist beim Spulen des Seitenwandstreifens 2 von radial innen nach radial außen zunächst für die erste Windung eine dreieckförmige Kontur e mit nach rechts geschwenkter Spitze die optimal gewünschte Kontur des Kautschukstranges 11. Daher wird zum Spulen der extrudierte Kautschukstrang 11 vom Extruder 10 kommend über den Fördertisch 12 in die Ausformeinrichtung 13, dann durch die Formrollenpaare 15, 16, 17, 18 der Ausformeinrichtung 13 hindurch geführt und über die Auflegerolle 14 auf die konturierte Aufbautrommel 9 aufgespult, wobei zunächst nur das vierte Formrollenpaar 18 zur Ausformung des extrudierten Kautschukstrangs 11 geschlossen ist und die anderen Formrollenpaare 15,16 und 17 geöffnet sind. Auf diese Weise wird die erste aufgelegte Windung des Kautschukstranges 11 entsprechend dem Öffnungskanal des Formrollenpaares 18 mit der gewünschte Dreiecksform mit nach rechts versetzter Spitze der Kontur e aufgespult. Wie in Fig. 6 zu erkennen ist, ist nur wenige Windungen später eine Dreiecksform f die für den Kautschukstrang 11 gewünschte Kontur, bei der das Dreieck die gleiche Basis, aber eine weiter nach links versetzte Spitze aufweist. Daher wird beim weiteren Spulen die Formrolle 18a langsam gesteuert von der in Fig.10 dargestellten nach rechts geschwenkten Arbeitsposition in die in Fig.9 dargestellte nach links geschwenkte Position soweit verschwenkt, bis die gewünschte Querschnittsform des Kautschukstrangs 11 erreicht ist. Dieser Vorgang erfolgt kontinuierlich und fließend, so dass beim Aufwickeln derjenigen Windung, für die Kontur f die optimiert gewünschte ist der Kautschukstrang 11 diese Kontur aufweist. Wie in Fig. 6 zu erkennen ist, ist danach eine Windung mit nahezu parallelogrammähnlicher Kontur g die optimierte Querschnittkontur des Kautschukstranges 11. Daher wird beim weiteren Spulen das Formrollenpaar 15 nun langsam geschlossen und dabei das Formrollenpaar 18 geöffnet, so dass beim Aufwickeln der gewünschten Windung mit parallelogrammförmiger Kontur g der Kautschukstrang 11 diese Kontur aufweist. Eine Windung später ist, wie in Fig. 6 dargestellt ist, eine viereckige Form h die optimierte gewünschte Querschnittsform des Kautschukstrangs 11. Daher wird während des weiteren Spulens das Formrollenpaar 16 langsam geschlossen und dabei das Formrollenpaar 15 geöffnet, so dass beim Aufwickeln der gewünschten Windung mit der viereckigen Form h der Kautschukstrang 11 diese Kontur aufweist. Wie in Fig. 6 deutlich zu erkennen ist, wird zum Abschluss des Spulens des Seitenwandstreifengummis 2 eine trapezförmige Querschnittsform i des Kautschukstrangs 11 1 die optimierte, gewünschte Kontur. Daher wird während des weiteren Spulens das Formrollenpaar 17 langsam geschlossen und dabei das Formrollenpaar 16 geöffnet, so dass während des Spulens kontinuierlich fließend die viereckige Kontur h in die Trapezform i übergeht und beim Aufspulen der letzten Windung der Kautschukstrang 11 mit trapezförmigem Querschnitt i aufgespult wird.

In entsprechender nicht weiter beschriebener Weise wird die Base 23 während ihres Spulens in ihrem Querschnitt durch gezieltes gesteuertes Öffnen und Schließen von Formrollenpaaren 15, 16, 17, 18 einer Ausformeinrichtung 13 im Querschnitt optimiert. In weiteren, nicht dargestellten Ausführungen ist in einer Ausformeinrichtung 13 zusätzlich eine oder mehrere weitere Formrollenpaare in analoger Weise ausgebildet, die eine noch größere Variabilität in der Ausformung der Querschnitte ermöglicht.

Fig. 5 zeigt ein weiteres Beispiel eines Kautschukbauteils das durch in dieses Verfahren des während des Spulens im Querschnitt an die Form des Kautschukbauteils optimierten Kautschukstranges 11 aufgespult wird. Fig. 5 zeigt hierzu ein sehr hoch ausgebildetes Kernprofil 6 eines Fahrzeugluftreifens, das beispielsweise bis in den Bereich des Gürtels 8 des Fahrzeugluftreifens reicht im radial oberen Erstreckungsbereich entsprechend der Krümmung der Karkasse im Reifen eine größere Krümmung erhält. Dabei ist erkennbar, wie von radial innen nach radial außen die an die Kontur des Kernprofils 6 angepassten Querschnitte des Kautschukstrangs 11 sich über die radiale Erstreckung des Kernprofils 6 verändert. Die Veränderung erfolgt aus einem unregelmäßigen Viereck k in ein Parallelogramm L, dann in ein höheres, schmaleres Parallelogramm m, dann in ein erstes Dreieck n und in ein weiteres flaches Dreieck o, die durch eine entsprechende Ausformeinrichtung 13, wie oben beschrieben, während des Spulens konturgerecht eingestellt werden.

In entsprechender Weise wird in einem nicht dargestellten Ausführungsbeispiel zur Herstellung eines Run-Flat-Reifens bekannter Art mit einer mondsichelförmiger Verstärkungseinlage im Bereich der Reifenseitenwand aus einem im Querschnitt mondsichelförmigem Bauteil aus speziellem hierfür geeignetem Kautschukmaterial bekannter Art das mondsichelförmige Bauteil durch Aufspulen eines extrudierten Kautschukstreifens erzeugt, wobei der extrudierte Kautschukstreifen während des Spulens in seinem Querschnitt durch gezieltes gesteuertes Öffnen und Schließen von Formrollenpaaren 15, 16, 17, 18 einer Ausformeinrichtung 13 im Querschnitt optimiert wird.

In dem oben genannten Ausführungsbeispielen ist in dem zentralen Steuerrechner 20 jeweils der gewünschte Konturverlauf des jeweiligen Bauteils gespeichert. Unter Berücksichtigung der Rotationsgeschwindigkeit des Aufbaukörpers 9, des Durchmessers der jeweiligen Position der gerade aufzuspulenden Windungen und dem gespeicherten Querschnittsverlauf des Kautschukstranges 11 werden die einzelnen Formrollenpaare 15,16,17 und 18 optimiert derart gesteuert, dass der Querschnittsverlauf des jeweils aufzuwindenden Kautschukstrangs 11 während des Aufspulens dem gewünschten Konturverlauf entspricht.

In den oben dargestellten Ausführungsbeispielen ist der Kautschukstrang 11 als beispielsweise rundschnurförmig extrudiert dargestellt. Die extrudierte Kaustschukstrang 11 ist in anderer Ausführung nicht mit runder, sondern beipielsweise linsenförmig oder rechteckig ausgebildet.

### Bezugszeichenliste

### (Teil der Beschreibung)

- 1: Laufstreifen
- 2: Seitenwand
- 3: Wulstkern
- 4: Innenschicht
- 5: Karkasse
- 6: Kernreiter
- 7: Wulstprofil
- 8: Gürtel
- 9: Konturierte Aufbautrommel
- 10: Extruder
- 11: Kautschukband
- 12: Fördertisch
- 13: Ausformeinrichtung
- 14: Auflegerolle
- 15: Formrollenpaar
- 16: Formrollenpaar
- 17: Formrollenpaar
- 18: Formrollenpaar
- 19: Rahmen
- 20: Steuerrechner
- 21: Schwenkachse
- 22: 22a, 22b Kontur der Formrollen
- 23: Base
- 24: Cap

## Patentansprüche

1. Verfahren zur Herstellung eines Fahrzeugluftreifens, bei dem ein extrudierter profilierter Kautschukstrang (11) zum Aufbau einer Reifenaufbauschicht einem rotatorisch angetriebenen Aufbaukörper (9) zum Aufbau einer Kautschukschicht zugeführt und schrauben- und/oder spiralförmig auf dem Aufbaukörper (9) aufgespult wird,
**dadurch gekennzeichnet,**
**dass** der extrudierte Kautschukstrang (11) zwischen Extruder (10) und Aufbaukörper (9) durch den Öffnungsspalt mehrerer hintereinander angeordneter Paare von drehbar gelagerten - insbesondere angetriebenen - Formrollen (15,16,17,18) zur Herstellung unterschiedlicher Querschnittsformen hindurch gefördert wird, wobei der Öffnungsspalt der einzelnen Paare jeweils unterschiedlich geformt ist und gesteuert geöffnet und geschlossen werden kann, und
**dass** während des Aufspulens des Kautschukstrangs (11) auf den Aufbaukörper (9) zur Veränderung der Querschnittsform des Kautschukstrangs (11) das Paar (15,16,17,18) der zur Ausformung auf den Kautschukstrang (11) einwirkenden Formrollen - insbesondere in Abhängigkeit von der Kontur des durch Aufwickeln erzeugten Reifenaufbauschicht des Fahrzeugluftreifens - gesteuert gewechselt wird.

2. Verfahren gemäß den Merkmalen von Anspruch 1,
wobei zur Erzeugung eines gleitenden Übergangs der Querschnittsformen beim Wechsel von einer durch ein erstes Formrollenpaar (15) erzeugte Querschnittsform zu einer anderen durch ein zweites Formrollenpaar (l6) erzeugte Querschnittsform zunächst das erste Formrollenpaar (15) soweit im seinem Öffnungsspalt geschlossen ist, dass eine Ausformung durch das erste Formrollenpaar (15) erfolgt, wobei dann zum Wechsel der Querschnittsform das zweite Formrollenpaar (16) mit seinem Öffnungsspalt soweit geschlossen wird, dass seine Formrollen (16a,16b) in formenden Kontakt zum Kautschukstrang (11) stehen, und dann weiter soweit geschlossen wird, dass das Formrollenpaar (16) den Ausformungszustand einnimmt, wobei der erste Formrollenpaar (15) erst geöffnet wird, wenn die Formrollen (16a,16b) des zweiten Formrollenpaars (16) soweit geschlossen sind, dass sie in formendem Kontakt zum Kautschukstrang (11) stehen, und somit eine zeitliche Überlappung des Öffnens und Schließens der beiden Formrollenpaare (15,16) erfolgt.

3. Verfahren gemäß den Merkmalen von Anspruch 1 oder 2,
wobei wenigstens ein Formrollenpaar (17,18) zur Einstellung der Form ihres Öffnungsspaltes und des hierdurch erzeugten Querschnittes gesteuert in der Position und/oder Ausrichtung seiner beiden Formrollen (17a,17b,18a,18b) zueinander verändert werden.

4. Verfahren gemäß den Merkmalen von Anspruch 3,
wobei die beiden Formrollen (17a,17b) des Formrollenpaares (17) in ihrer Position zueinander in Richtung ihrer Rotationsachsen gesteuert verschoben werden.

5. Verfahren gemäß den Merkmalen von Anspruch 3 oder 4,
wobei eine der beiden Formrollen (18a,18b) des Formrollenpaares (18) um eine Achse senkrecht zu ihrer Rotationsachse gesteuert verschwenkt wird.

6. Vorrichtung zum Zuführen und Andrücken von strangförmigem profilierten Kautschukmaterial zu einem rotatorisch antreibbaren Aufbaukörper (9) zum Aufbau einer Reifenaufbauschicht auf dem Aufbaukörper (9),
mit einer Extrudereinrichtung (10) zum Erzeugen eines strangförmigen extrudierten Kautschukmaterials (11), mit einer der Extrudereinrichtung (10) in Förderrichtung des strangförmigen extrudierten Kautschukmaterials (11) nachgeordneten Ausformungseinrichtung (13) zur Ausformung des strangförmigen extrudierten Kautschukmaterials (11) und mit einer der Ausformungseinrichtung (13) in Förderrichtung nachgeordneten Andrückeinrichtung (14) zum Auflegen- und Andrücken des ausgeformten, strangförmigen extrudierten Kautschukmaterials (11) auf dem Aufbaukörper (9),
**dadurch gekennzeichnet,**
**dass** die Ausformungseinrichtung (13) mit mehreren in Förderrichtung des extrudierten Kautschukmaterials (11) hintereinander angeordneten Paaren (15,16,17,18) von drehbar gelagerten Formrollen mit jeweils einem unterschiedlich geformten und gesteuert öffenbaren und gesteuert schließbaren Öffnungsspalt ausgebildet ist,
**dass** der Förderweg des Kautschukmaterials (11) jeweils durch den Öffnungsspalt dieser hintereinander angeordneten Paare (15,16,17,18) von drehbar gelagerten Formrollen geführt ausgebildet ist,
**dass** die Paare (15,16,17,18) von - insbesondere antreibbar - drehbar gelagerten Formrollen mit einer Steuereinrichtung (20) zum wahlweise Öffnen und Schließen der einzelnen Paare (15,16,17,18) von Formrollen zur Herstellung unterschiedlicher Querschnittsformen während der Förderung des strangförmigen extrudierten Kautschukmaterials (11) in Wirkverbindung stehen.

7. Vorrichtung gemäß den Merkmalen von Anspruch 6,
wobei zwei oder mehrere - insbesondere alle - Paare (15,16,17,18) von Formrollen jeweils mit unterschiedlichen Formkonturen wenigstens einer - insbesondere beider - Formrollen ausgebildet sind.

8. Vorrichtung gemäß den Merkmalen von Anspruch 6 oder 7,
wobei wenigstens ein Paar (17) von Formrollen (17a,17b) mit parallelen Rotationsachsen ausgebildet sind und die beiden Formrollen (17a,17b) in Richtung ihrer Rotationsachsen in ihrer Position zu einander gesteuert verschiebbar gelagert sind,
wobei Mittel zum gesteuerten Verschieben der beiden Formrollen (17a,17b) in ihrer Position zu einander zur gesteuerten Einstellung der Form des Öffnungsspaltes in Wirkverbindung zu wenigstens einer der beiden Formrollen (17a,17b) stehen, die mit der Steuereinrichtung (20) in Verbindung stehen.

9. Vorrichtung gemäß den Merkmalen von einem oder mehreren der Ansprüche 6 bis 8,
wobei wenigstens ein Paar (18) von Formrollen (18a,18b) mit parallelen Rotationsachsen ausgebildet sind und wenigstens eine (18a) der beiden Formrollen (1 8a,1 8b) um eine Achse senkrecht zu ihrer Rotationsachse gesteuert schwenkbar gelagert ist,
wobei Mittel zum gesteuerten Verschwenken zur gesteuerten Einstellung der Form des Öffnungsspaltes in Wirkverbindung zu der schwenkbar gelagerten Formrolle (18a) stehen, die mit der Steuereinrichtung (20) in Verbindung stehen.

## Claims

1. Method for producing a pneumatic vehicle tyre, in which an extruded profiled strand of rubber (11) for building up a tyre building layer is fed to a rotatably driven building body (9) for building up a layer of rubber and is wound up helically and/or spirally on the building body (9), **characterized in that**, between the extruder (10) and the building body (9), the extruded strand of rubber (11) is conveyed through the opening gap of a number of pairs of rotatably mounted - in particular driven - forming rollers (15, 16, 17, 18) arranged one behind the other for producing different cross-sectional forms, wherein the opening gap of the individual pairs is differently formed in each case and can be opened and closed in a controlled manner, and **in that**, during the winding up of the strand of rubber (11) onto the building body (9), to change the cross-sectional form of the strand of rubber (11), the pair (15, 16, 17, 18) of forming rollers acting on the strand of rubber (11) for shaping purposes is changed in a controlled manner - in particular in dependence on the contour of the tyre building layer of the pneumatic vehicle tyre that is created by winding.

2. Method according to the features of Claim 1, wherein, to create a smooth transition between the cross-sectional forms when changing from one cross-sectional form created by a first pair of forming rollers (15) to another cross-sectional form created by a second pair of forming rollers (16), firstly the first pair of forming rollers (15) is closed in its opening gap to the extent that shaping is performed by the first pair of forming rollers (15), wherein then, to change the cross-sectional form, the second pair of forming rollers (16) is closed with its opening gap to the extent that its forming rollers (16a, 16b) are in forming contact with the strand of rubber (11), and then is closed further to the extent that the pair of forming rollers (16) assumes the shaping state, wherein the first pair of forming rollers (15) is only opened when the forming rollers (16a, 16b) of the second pair of forming rollers (16) are closed to the extent that they are in forming contact with the strand of rubber (11), and consequently there is an overlap in time between the opening and closing of the two pairs of forming rollers (15, 16) .

3. Method according to the features of Claim 1 or 2, wherein, to set the form of its opening gap and of the cross section thereby created, at least one pair of forming rollers (17, 18) is changed in a controlled manner in the position and/or alignment of its two forming rollers (17a, 17b, 18a, 18b) in relation to one another.

4. Method according to the features of Claim 3, wherein the two forming rollers (17a, 17b) of the pair of forming rollers (17) are displaced in a controlled manner in their position in relation to one another in the direction of their axes of rotation.

5. Method according to the features of Claim 3 or 4, wherein one of the two forming rollers (18a, 18b) of the pair of forming rollers (18) is pivoted in a controlled manner about an axis perpendicular to its axis of rotation.

6. Apparatus for feeding and pressing strand-like profiled rubber material to a rotationally drivable building body (9) for building up a tyre building layer on the building body (9), with an extruder device (10) for creating a strand-like extruded rubber material (11), with a shaping device (13), arranged downstream of the extruder device (10) in the conveying direction of the strand-like extruded rubber material (11), for shaping the strand-like extruded rubber material (11) and with a pressing device (14), arranged downstream of the shaping device (13) in the conveying direction, for placing and pressing the shaped, strand-like extruded rubber material (11) on the building body (9), **characterized in that** the shaping device (13) is formed with a number of pairs (15, 16, 17, 18) of rotatably mounted forming rollers arranged one behind the other in the conveying direction of the extruded rubber material (11) and each having an opening gap which is differently formed and can be opened and closed in a controlled manner, **in that** the conveying path of the rubber material (11) is respectively formed by the opening gap of these pairs (15, 16, 17, 18) of rotatably mounted forming rollers arranged one behind the other, **in that** the pairs (15, 16, 17, 18) of - in particular drivably - rotatably mounted forming rollers are in operative connection with a control device (20) for optionally opening and closing the individual pairs (15, 16, 17, 18) of forming rollers for producing different cross-sectional forms during the conveyance of the strand-like extruded rubber material (11).

7. Apparatus according to the features of Claim 6, wherein two or more - in particular all of the - pairs (15, 16, 17, 18) of forming rollers are respectively formed by different form contours of at least one - in particular both - forming rollers.

8. Apparatus according to the features of Claim 6 or 7, wherein at least one pair (17) of forming rollers (17a, 17b) is formed with parallel axes of rotation and the two forming rollers (17a, 17b) are mounted such that they can be displaced in a controlled manner in their position in relation to one another in the direction of their axes of rotation, wherein, for controlled setting of the form of the opening gap, means for the controlled displacement of the two forming rollers (17a, 17b) in their position in relation to one another are in operative connection with at least one of the two forming rollers (17a, 17b) that are in connection with the control device (20).

9. Apparatus according to the features of one or more of Claims 6 to 8, wherein at least one pair (18) of forming rollers (18a, 18b) is formed with parallel axes of rotation and at least one (18a) of the two forming rollers (18a, 18b) is mounted such that it can pivot in a controlled manner about an axis perpendicular to its axis of rotation, wherein, for controlled setting of the form of the opening gap, means for controlled pivoting that are in connection with the control device (20) are in operative connection with the pivotably mounted forming roller (18a).

## Revendications

1. Procédé de fabrication d'un bandage pneumatique pour roue de véhicule, dans lequel pour former une couche de formation du bandage de roue, une barre de caoutchouc (11) extrudée et profilée est amenée à un corps (9) de formation entraîné en rotation pour former une couche de caoutchouc et est enroulée en hélice et/ou en spirale sur le corps de formation (9), **caractérisé en ce que**
la barre (11) de caoutchouc extrudée est transportée entre l'extrudeuse (10) et le corps de formation (9) à travers l'interstice d'ouverture de plusieurs paires, disposées les unes à la suite des autres, de cylindres de formation (15, 16, 17, 18) montés à rotation et en particulier entraînés, pour établir des sections transversales de différentes formes, l'interstice d'ouverture de chacune des paires présentant une forme différente et pouvant être ouvert et fermé de manière contrôlée, et
**en ce que** pour modifier la forme de la section transversale de la barre de caoutchouc (11) pendant l'enroulement de la barre de caoutchouc (11) sur le corps de formation (9), la paire (15, 16, 17, 18) de rouleaux de formation qui agit pour mouler la barre de caoutchouc (11) est remplacée de manière contrôlée par une autre, en particulier en fonction du contour de la couche de bandage pneumatique de roue de véhicule formée par enroulement.

2. Procédé selon les caractéristiques de la revendication 1, dans lequel pour former une transition sans discontinuité entre les formes de la section transversale lors du passage d'une forme de section transversale formée par une première paire (15) de rouleaux de formation et une autre forme de section transversale formée par une deuxième paire (16) de rouleaux de formation, l'interstice d'ouverture de la première paire (15) de rouleaux de formation est fermé suffisamment pour obtenir un moulage par la première paire (15) de rouleaux de formation, tandis que pour changer la forme de la section transversale, l'interstice d'ouverture de la deuxième paire (16) de rouleaux de formation est fermé suffisamment pour que ces rouleaux de formation (16a, 16b) entrent en contact de moulage avec la barre de caoutchouc (11) et est ensuite fermé suffisamment pour que la paire (16) de rouleaux de formation prenne la position de moulage, la première paire (15) de rouleaux de formation n'étant pas ouverte avant que les rouleaux de formation (16a, 16b) de la deuxième paire (16) de rouleaux de formation aient été fermés suffisamment pour qu'ils soient en contact de moulage avec la barre de caoutchouc (11), ce qui entraîne une superposition temporelle de l'ouverture et de la fermeture des deux paires (15, 16) de rouleaux de formation.

3. Procédé selon les caractéristiques des revendications 1 ou 2, dans lequel la position et/ou l'orientation des deux rouleaux de formation (17a, 17b, 18a, 18b) d'au moins une paire (17, 18) de rouleaux de formation sont modifiées de manière contrôlée pour ajuster la forme de leur interstice d'ouverture et de la section transversale ainsi formée.

4. Procédé selon les caractéristiques de la revendication 3, dans lequel la position mutuelle des deux rouleaux de formation (17a, 17b) de la paire (17) de rouleaux de formation est déplacée de manière contrôlée dans la direction de leur axe de rotation.

5. Procédé selon les caractéristiques des revendications 3 ou 4, dans lequel l'un des deux rouleaux de formation (18a, 18b) de la paire (18) de rouleaux de formation est incliné de manière contrôlée autour d'un axe perpendiculaire à son axe de rotation.

6. Dispositif en vue d'amener et de repousser du matériau de caoutchouc profilé en barre vers un corps de formation (9) apte à être entraîné en rotation pour former une couche de bandage de roue sur le corps de formation (9), le dispositif présentant un ensemble d'extrudeuse (10) qui forme un matériau de caoutchouc (11) extrudé en forme de barre, un ensemble de formation (13) disposé en aval de l'ensemble d'extrusion (10) dans la direction de transport du matériau de caoutchouc (11) extrudé en forme de barre et qui moule le matériau de caoutchouc (11) extrudé en forme de barre et un ensemble de poussée (14) disposé en aval de l'ensemble de moulage (13) dans la direction du transport et qui applique et repousse sur le corps de formation (9) le matériau de caoutchouc (11) extrudé en forme de barre et moulé,
**caractérisé en ce que**
l'ensemble de moulage (13) est formé de plusieurs paires (15, 16, 17, 18), disposées à la suite les unes des autres dans la direction de transport du matériau de caoutchouc (11) extrudé, de rouleaux de formation montés à rotation et présentant chacun un interstice d'ouverture de forme différente, apte à être ouvert de manière contrôlée et fermé de manière contrôlée,
**en ce que** le parcours de transport du matériau de caoutchouc (11) est guidé à travers l'interstice d'ouverture de ces paires (15, 16, 17, 18), disposées à la suite les unes des autres, de rouleaux de formation montés à rotation,
**en ce que** les paires (15, 16, 17, 18) de rouleaux de formation montés à rotation et en particulier entraînés coopèrent avec une unité de commande (20) qui ouvre et ferme sélectivement les différentes paires (15, 16, 17, 18) de rouleaux de formation en vue de former différentes formes de section transversale pendant le transport du matériau de caoutchouc (11) extrudé en forme de barre.

7. Dispositif selon les caractéristiques de la revendication 6, dans lequel au moins un et en particulier les deux rouleaux de formation de deux ou plusieurs et en particulier de toutes les paires (15, 16, 17, 18) de rouleaux de formation sont configurés avec un contour différent.

8. Dispositif selon les caractéristiques des revendications 6 ou 7, dans lequel au moins une paire (17) de rouleaux de formation (17a, 17b) est configurée avec des axes de rotation parallèles, les deux rouleaux de formation (17a, 17b) étant montés de manière à pouvoir coulisser de manière contrôlée l'un par rapport à l'autre dans la direction de leur axe de rotation et dans lequel des moyens de déplacement contrôlé de la position des deux rouleaux de formation (17a, 17b) l'un par rapport à l'autre en vue d'établir de manière contrôlée la forme de l'interstice d'ouverture coopèrent avec au moins l'un des deux rouleaux de formation (17a, 17b) et sont raccordés à l'unité de commande (20).

9. Dispositif selon les caractéristiques d'une ou plusieurs des revendications 6 à 8, dans lequel au moins une paire (18) de rouleaux de formation (18a, 18b) est configurée avec des axes de rotation parallèles et au moins l'un (18a) des deux rouleaux de formation (18a, 18b) est monté de manière à pouvoir pivoter de manière contrôlée autour d'un axe perpendiculaire à son axe de rotation, des moyens de pivotement contrôlé qui ajustent de manière contrôlée la forme de l'interstice d'ouverture coopérant avec le rouleau de formation (18a) monté à pivotement et étant raccordés à l'unité de commande (20).
